# EUROPEAN PATENT SPECIFICATION

(11) **EP 2 617 634 B1**
(45) Date of publication and mention of the grant of the patent: **17.05.2017**
(21) Application number: 13151105.7
(22) Date of filing: 14.01.2013
(51) Int. Cl.: B62K 25/28

(54) **Swing arm supporting a rear wheel of a motorcycle**
Ein Hinterrad eines Motorrads tragender Schwingarm
Bras oscillant portant une roue arrière d'un motocycle

(30) Priority: 23.01.2012 JP 2012011010
(43) Date of publication of application: 24.07.2013
(73) Proprietor: Honda Motor Co., Ltd., Tokyo 107-8556 (JP)
(72) Inventor: Mikura, Keita, Saitama, 351-0193 (JP)
(74) Representative: Ilgart, Jean-Christophe

(56) References cited:
- JP-A- 2002 225 775
- US-A1- 2007 045 024

## Description

### [Technical Field]

The present invention relates to an improvement in a swing arm which supports a rear wheel or the like of a motorcycle.

### [Background Art]

A motorcycle adopts the structure where a swing arm is connected to a vehicle body frame by a pivot shaft, and a rear wheel is rotatably mounted on the swing arm. The swing arm swings in the vertical direction about the pivot shaft so as to allow the vertical movement of the rear wheel thus maintaining positive riding sensation.

Recently, in motorcycles, a swing arm made of an aluminum alloy or a magnesium alloy has been adopted for reducing the weight of the swing arm and for enhancing the attractiveness of the product. Further, there has been also known a swing arm made of an aluminum alloy manufactured by die-casting (see Patent literature 1 JP-A-2008-81107 (Fig. 2, Fig. 4), for example).

A rear fork (hereinafter, referred to as a swing arm) in patent literature 1 has a shape shown in Fig. 2 in patent literature 1. That is, as shown in Fig. 4 in patent literature 1, left and right arm portions have a U-shaped cross section and open toward the outside of a vehicle body.

Such a U-shaped cross section is constituted of an inner wall portion on a vehicle-widthwise center side, an upper flange portion which extends sideward of the vehicle body from an upper end of the inner wall portion, and a lower flange portion which extends sideward of the vehicle body from a lower end of the inner wall portion. By eliminating an outer wall, the weight of the swing arm can be reduced.

On the other hand, the swing arm is exposed to soil and sand splashing up from a road surface. Although most of soil and sand fall back down due to a gravitational action, soil and sand remain piled up on an inner corner formed by the inner wall portion and the lower flange portion and an upper surface of the lower flange portion. Such a piled up material causes the swing arm to become dirty.

In the structure of patent literature 1, the U-shaped cross section opens sideward of the vehicle body and hence, any dirt is likely to be clearly visible. To maintain the design property (appearance property), it is necessary to undertake cleaning or washing of a vehicle frequently and hence, it takes considerable man-hours. Accordingly, countermeasure for such problems have been requested. US-A-20070045024 discloses a swing arm which comprises left and right conforming recesses housing a shock system of a rear wheel.

### [Summary of the Invention]

It is an object of the present invention to provide a swing arm which can make dirt barely visible from the outside while reducing the weight of the swing arm.

The invention is directed to a swing arm which includes: a pivot portion which is to be connected to a vehicle body frame by a pivot shaft, a pair of left and right front arm portions which extends toward a rear side of a vehicle from the pivot portion, a cross portion which connects rear portions of the pair of left and right front arm portions, and left and right rear arm portions which extend toward the rear side of the vehicle from the cross portion so as to sandwich a rear wheel therebetween and support the rear wheel in a rotatable manner, wherein a swing-arm front portion which is constituted of the pair of left and right front arm portions and the cross portion has a hollow structure, and the left and right rear arm portions are respectively constituted of an outer wall portion, an upper flange portion which extends toward the vehicle-widthwise center from an upper end of the outer wall portion, and a lower flange portion which extends toward the vehicle-widthwise center from a lower end of the outer wall portion, and the left and right rear arm portions have a U-shaped cross section which opens toward a vehicle-widthwise center side. The recess of the U-shaped cross section is open to the outside of the swing arm.

The invention may also be characterized in that the swing arm front portion and the left and right rear arm portions are partitioned by partition walls, and the partition walls are arranged in an inclined manner such that the partition walls are positioned more on a rear side of the vehicle as the partition walls extend toward the vehicle-widthwise center.

The invention may also be characterized in that outer surfaces of the pair of left and right front arm portions in the vehicle widthwise direction and outer surfaces of the left and right rear arm portions in the vehicle widthwise direction are formed of a continuous surface respectively, and a rotation stopper member which suppresses the rotation of a caliper bracket is integrally formed on one of the left and right rear arm portions such that the rotation stopper member extends toward the vehicle-widthwise center from the outer wall portion.

The invention may also be characterized in that a chain receiving member which receives a chain coming off from a sprocket is integrally formed on the other of the left and right rear arm portions such that the chain receiving member extends toward the vehicle-widthwise center from the upper flange portion.

The invention may also be characterized in that a sand removing hole for scraping out a sand core after casting which is performed using the sand core is formed in a front wall and a rear wall of the cross portion respectively.

According to the invention called for in claim 1, it is unavoidable that dirt is accumulated on an inner corner formed by the outer wall portion and the lower flange portion and on an upper surface of the lower flange portion. However, such a piled up material and dirt are shielded by the outer wall portion and the upper flange portion so that the piled up material and dirt are not visible from the outside. Further, the rear arm portions have no inner wall and the pair of left and right front arm portions and the cross portion are formed into a hollow shape and hence, the weight of the swing arm can be reduced.

According to the present invention, it is possible to provide the swing arm which can make dirt and the like barely visible from the outside while reducing the weight of the swing arm.

According to the invention called for in claim 2, the partition wall which partitions the swing arm front portion and the left and right rear arm portions is arranged in an inclined manner such that the partition wall is positioned more on a rear side of the vehicle as the partition wall extends toward the vehicle-widthwise center.

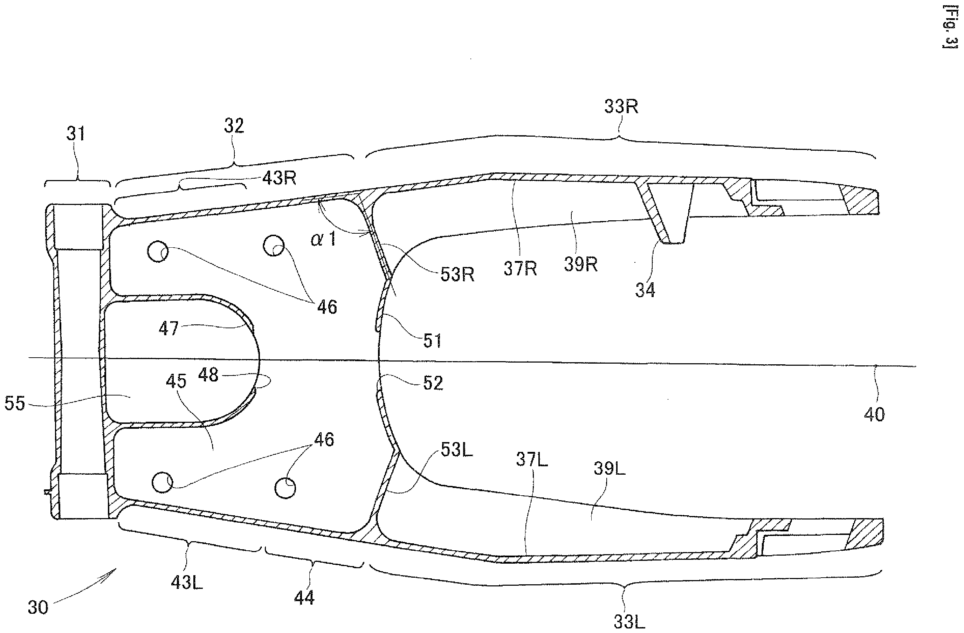

Due to such a constitution, an angle (see symbol α1 in Fig. 3) made by the partition wall and the outer wall of the swing arm front portion can be increased thus enhancing the sand removing property of the core in the swing arm front portion.

Further, when the swing arm is manufactured by casting, it is recommended that a cast mold for forming the left and right rear arm portions includes slide molds which are slidable from the vehicle-widthwise center. When the partition wall is arranged in an inclined manner, the slide molds can be gradually separated from the swing arm front portion at the time of removing the slide molds. That is, the slide molds barely interfere with the swing arm front portion and hence, the removal of the slide molds can be easily performed thus enhancing productivity in casting.

According to the invention called for in claim 3, the rotation stopper member which suppresses the rotation of the caliper bracket is integrally formed on one of the left and right rear arm portions such that the rotation stopper member extends toward the vehicle-widthwise center from the outer wall portion.

Compared to a case where a separately-prepared rotation stopper member is mounted on one of the left and right rear arm portions, by integrally forming the rotation stopper member on one of the left and right rear arm portions as in the case of the present invention, it is possible to reduce the number of parts and also a manufacturing cost.

In addition, the rotation stopper member extends toward the vehicle-widthwise center from the outer wall portion and hence, the rotation stopper member is shielded by the outer wall portion and the upper flange portion so that the rotation stopper member is barely visible from the outside. That is, the design property is not affected even when the rotation stopper member is provided.

According to the invention called for in claim 4, the chain receiving member which receives the chain coming off from the sprocket is integrally formed on the other of the left and right rear arm portions such that the chain receiving member extends toward the vehicle-widthwise center from the upper flange portion.

Compared to a case where a separately-prepared chain receiving member is mounted on the other of the left and right rear arm portions, by integrally forming the chain receiving member on the other of the left and right rear arm portions as in the case of the present invention, it is possible to reduce the number of parts and a manufacturing cost.

In addition, the chain receiving member which constitutes a countermeasure to the chain's coming off can be easily formed on the rear arm portion by integral forming thus aiding the countermeasure to the chain's coming off.

According to the invention called for in claim 5, the sand removing hole for scraping out the sand core after casting which is performed using the sand core is formed in the front wall and the rear wall of the cross portion respectively.

When the swing arm front portion is hollow, the use of a sand core is recommended. However, in such a case, a sand removing hole for scraping out the sand core becomes inevitable. When a diameter of the sand removing hole is small, it takes time for scraping out the sand core. On the other hand, when the diameter of the sand removing hole is large, the sand removing hole appears clearly.

According to the present invention, the sand removing hole is formed in the front wall and the rear wall of the cross portion. By forming the sand removing hole at such positions, the sand removing holes are barely visible from sides of the vehicle thus enhancing the design property.

Further, a front side of the cross portion faces a front space (opening portion) defined between the left and right front arm portions and hence, sand can be scraped out to the front space. In the same manner, a rear side of the cross portion faces a rear space defined between the left and right rear arm portions and hence, sand can be scraped out to the rear space. Accordingly, a sand core can be easily scraped out.

### [Brief Description of the Drawings]

Fig. 1 is a plan view of a rear portion of a motorcycle according to the present invention.
Fig. 2 is a cross-sectional view taken along a line 2-2 in Fig. 1.
Fig. 3 is a cross-sectional view of a swing arm according to the present invention.
Fig. 4 is a plan view of a lower casting mold.
Fig. 5 is a cross-sectional view taken along a line 5-5 in Fig. 4.
Fig. 6 is an operational view of sand removing holes.
Fig. 7 is a plan view of a swing arm cast product.
Fig. 8 is a cross-sectional view taken along a line 8-8 in Fig. 7(b).
Fig. 9 is a cross-sectional view taken along a line 9-9 in Fig. 7(b).

### [Detailed description of preferred embodiments]

An embodiment of the present invention is explained in conjunction with attached drawings hereinafter. Here, in the explanation, frontward and rearward directions, leftward and rightward directions are determined with reference to the directions as viewed from a rider riding on a motorcycle. Further, drawings are viewed in the direction of symbols.

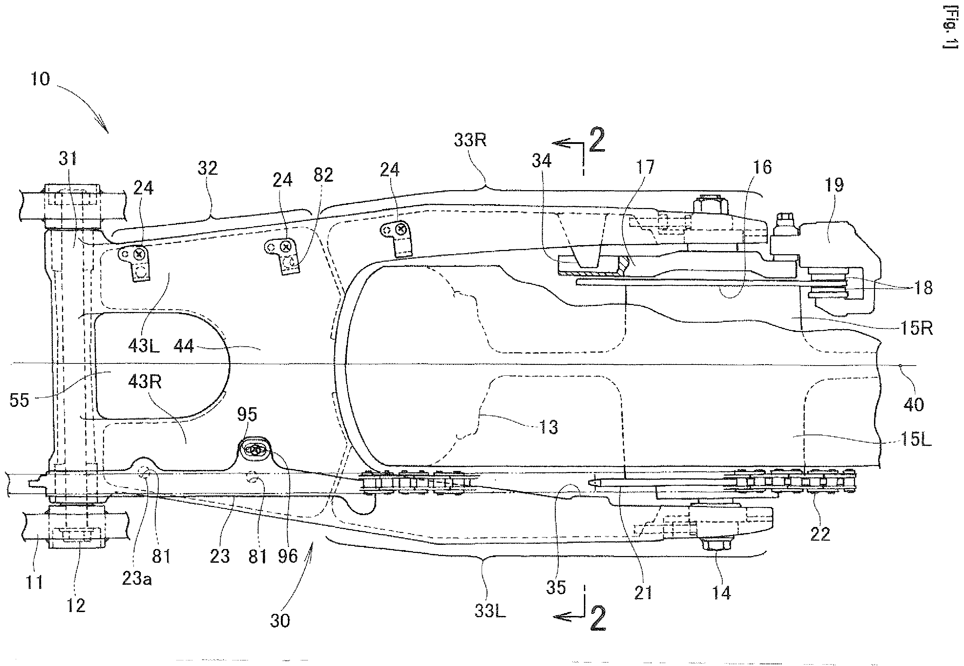

As shown in Fig. 1, a swing arm 30 is constituted of a pivot portion 31 which is connected to a vehicle body frame 11 of a motorcycle 10 by a pivot shaft 12, a swing arm front portion 32 which extends toward a rear side of a vehicle from the pivot portion 31 and has a U shape as viewed in a plan view, and a left rear arm portion 33L (symbol L being a suffix indicating a left side, the same indication being applicable to the explanation made hereinafter) and a right rear arm portion 33R (symbol R being a suffix indicating a right side, the same indication being applicable to the explanation made hereinafter) which extend toward the rear side of the vehicle from the swing arm front portion 32 so as to sandwich a rear wheel 13 therebetween. The left rear arm portion 33L and the right rear arm portion 33R rotatably support the rear wheel 13 by way of a rear wheel axle 14.

A brake disc 16 is fixed to a right hub 15R of the rear wheel 13. A caliper bracket 17 is supported on the rear wheel axle 14, and a brake caliper 19 having friction plates 18, 18 is mounted on one end of the caliper bracket 17. By sandwiching the brake disc 16 by the friction plates 18, 18 of the brake caliper 19, it is possible to apply braking to the rear wheel 13. Here, to prevent the caliper bracket 17 from being rotated due to a reaction generated by the applying of braking, the other end of the caliper bracket 17 is engaged with a rotation stopper member 34 which extends from the right rear arm portion 33R.

Further, a driven sprocket 21 is mounted on the left hub 15L of the rear wheel 13, a drive chain 22 is wound around the driven sprocket 21, and power is transmitted to the rear wheel 13 by way of the drive chain 22 so as to rotate the rear wheel 13.

When a play (deflection) of the drive chain 22 becomes excessively large, there may be a case where the drive chain 22 comes off from the driven sprocket 21. When the drive chain 22 comes off toward a vehicle-widthwise center 40 side, the drive chain 22 is placed on the left hub 15L. When the drive chain 22 comes off toward the outside of a vehicle body (in the direction away from the vehicle-widthwise center 40), the drive chain 22 falls onto the left rear arm portion 33L.

The present invention is configured such that a chain receiving member 35 extends to the vehicle-widthwise center 40 from the left rear arm portion 33L, and the chain receiving member 35 receives the drive chain 22. Due to such a constitution, there is no possibility that the drive chain 22 falls into a gap defined between the left rear arm portion 33L and the rear wheel 13 and the drive chain 22 is sandwiched between the left rear arm portion 33L and the rear wheel 13.

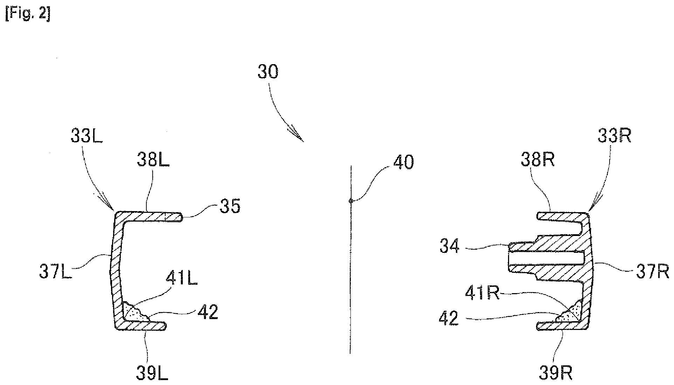

As shown in Fig. 2, the left rear arm portion 33L is constituted of an outer wall potion 37L, an upper flange portion 38L which extends toward the vehicle-widthwise center 40 from an upper end of the outer wall portion 37L, and a lower flange portion 39L which extends toward the vehicle-widthwise center 40 from a lower end of the outer wall portion 37L and hence, the left rear arm portion 33L has a U-shaped cross section which opens toward the vehicle-widthwise center 40 side. In the same manner, the right rear arm portion 33R is constituted of an outer wall potion 37R, an upper flange portion 38R which extends toward the vehicle-widthwise center 40 from an upper end of the outer wall portion 37R, and a lower flange portion 39R which extends toward the vehicle-widthwise center 40 from a lower end of the outer wall portion 37R and hence, the right rear arm portion 33R has a U-shaped cross section which opens toward the vehicle-widthwise center 40 side.

Since the left and right rear arm portions 33L, 33R have no inner wall, the left and right rear arm portions 33L, 33R are made lighter.

The rotation stopper member 34 is integrally formed on the outer wall portion 37 of the right rear arm portion 33R.

If the separately-prepared rotation stopper member 34 is posteriorly mounted on the right rear arm portion 33R, the number of parts is increased and also the man-hours for mounting the rotation stopper member 34 become necessary. In this respect, the rotation stopper member 34 is integrally formed on the outer wall portion 37 in this embodiment and hence, the number of parts can be reduced and a manufacturing cost can be also reduced.

In addition, the rotation stopper member 34 extends toward the vehicle-widthwise center 40 from the outer wall portion 37R and hence, the rotation stopper member 34 is shielded by the outer wall portion 37R and the upper flange portion 38R whereby the rotation stopper member 34 is barely visible from the outside. That is, a design property is not affected even when the rotation stopper member 34 is provided.

The chain receiving member 35 is integrally formed on the upper flange portion 38 of the left rear arm portion 33L.

If a separately-prepared chain receiving member 35 is posteriorly mounted on the left rear arm portion 33L, the number of parts is increased and also the man-hours for mounting the chain receiving member 35 become necessary. In this respect, the chain receiving member 35 is integrally formed on the upper flange portion 38 in this embodiment and hence, the number of parts can be reduced and a manufacturing cost can be also reduced.

In addition, the chain receiving member 35 which constitutes a countermeasure to the chain's coming off can be easily formed on the left rear arm portion 33L by integral forming thus aiding the countermeasure to the chain's coming off.

Soil and sand on a road surface are stirred up by the rear wheel 13 shown in Fig. 1 and hence, soil and sand are liable to adhere to the left and right rear arm portions 33L, 33R. As a result, as shown in Fig. 2, piled up materials 42, 42 made of soil and sand are liable to be piled up on inner corners 41L, 41R made by the outer wall portions 37L, 37R and the lower flange portions 39L, 39R. The piled-up materials 42, 42 are shielded by the outer wall portions 37L, 37R and the upper flange portions 38L, 38R and hence, the piled-up materials 42, 42 are not visible from the outside. Further, the outer wall portions 37L, 37R form the substantially vertical surfaces and hence, soil and sand are barely piled up on the outer wall portions 37L, 37R. When soil and sand are placed on upper surfaces of the upper flange portions 38L, 38R, the soil and sand are removed by vibrations and hence, soil and sand are barely piled up on the upper flange portions 38L, 38R.

Due to such a constitution, according to the present invention, it is possible to provide the swing arm 30 which can make dirt and the like barely visible from the outside.

Next, the internal structure of the swing arm 30 is explained in conjunction with Fig. 3.

Fig. 3 is a cross-sectional plan view of the swing arm 30. The swing arm 30 is constituted of the pivot portion 31, the swing arm front portion 32, and the left and right rear arm portions 33L, 33R.

Particularly, the swing arm front portion 32 is constituted of a left front arm portion 43L and a right front arm portion 43R which extend from the pivot portion 31, and a cross portion 44 which transversely extends between a rear portion of the left front arm portion 43L and a rear portion of the right front arm portion 43R in the vehicle widthwise direction. The swing arm front portion 32 has the hollow structure. Outer surfaces of the pair of left and right front arm portions 43L, 43R in the vehicle widthwise direction and outer surfaces of left and right rear arm portions 33L, 33R in the vehicle widthwise direction are formed of a continuous surface.

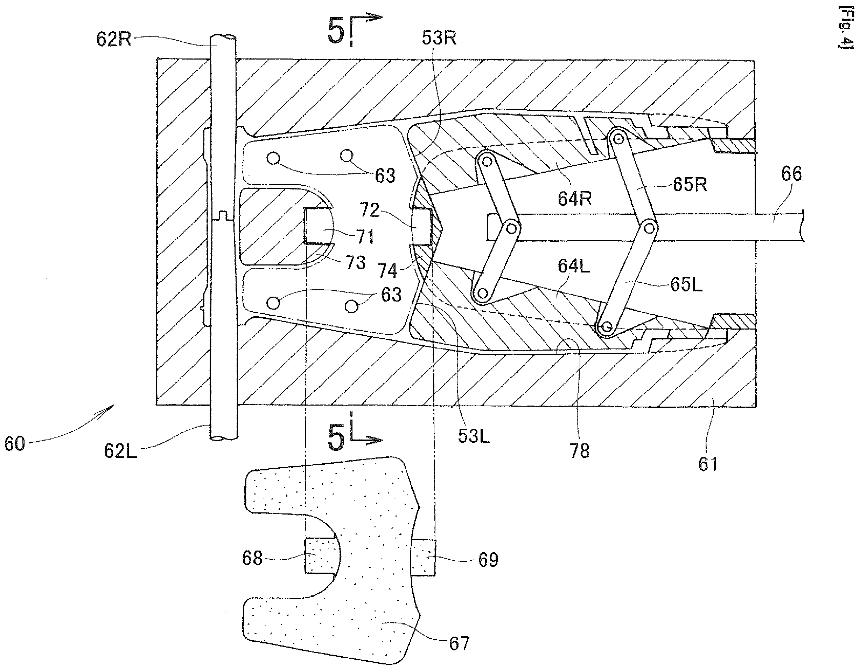

Through holes for casting 46 (in this embodiment, four through holes) remain on a bottom 45 of the swing arm front portion 32 as marks which are formed after removing support pins (Fig. 4, symbol 63).

A sand removing hole 48 is formed in a front wall 47 of the cross portion 44, and a sand removing hole 52 is formed in a rear wall 51 of the cross portion 44.

Further, the swing arm front portion 32 and the left and right rear arm portions 33L, 33R are partitioned by partition walls 53L, 53R, and the partition walls 53L, 53R are arranged in an inclined manner such that the partition walls 53L, 53R are positioned more on a rear side of the vehicle as the partition walls 53L, 53R extend toward the vehicle-widthwise center 40. That is, an angle α1 made by the partition wall 33L, 33R and the outer wall of the swing arm front portion 32 is an obtuse angle (an angle exceeding 90°), and the angle α1 can be increased so as to enhance a sand removing property in removing sand from the swing arm front portion 32.

As shown in Fig. 1, a large opening portion 55 which is surrounded by the pivot portion 31, the left front arm portion 43L, the right front arm portion 43R and the cross portion 44 is formed. The weight of the swing arm 30 can be reduced by forming such an opening portion 55.

The swing arm 30 having such structure is manufactured by casting. A casting mold for manufacturing the swing arm 30 is explained hereinafter.

As shown in Fig. 4, left and right slide rods 62L, 62R are inserted into a lower mold 61 of a casting mold 60 in a movable manner. A plurality of (four in this embodiment) support pins 63 are inserted into the lower mold 61 from below in a movable manner in the vertical direction (in the direction perpendicular to a surface of a paper on which drawing is illustrated). Left and right slide molds 64L, 64R are set in the lower mold 61, and links 65L, 65R and a driver 66 for driving these left and right slide molds 64L, 64R are set in the lower mold 61.

The partition walls 53L, 53R are inclined and hence, by merely pulling the driver 66 toward the rear side of the vehicle, it is possible to make the left and right slide molds 64L, 64R come closer to the center.

Here, the left and right slide molds 64L, 64R may be formed of a sand mold (sand core). That is, the sand mold is suitable for the small-lot multi-kind production, and the slide mold is suitable for the mass production and hence, either one of the sand mold and the slide mold may be selected by taking into account productivity.

A sand core 67 having an H shape as viewed in a plan view is separately formed. Core prints 68, 69 extend from the sand core 67 in the frontward and rearward directions. Receiving recessed portions 71, 72 which support these core prints 68, 69 are mounted on island portions 73, 74 of the lower mold 61 respectively. The sand core 67 is mounted on the lower mold 61 in such a manner that the sand core 67 is placed on the support pins 63 while placing the core prints 68, 69 on the receiving recessed portions 71, 72.

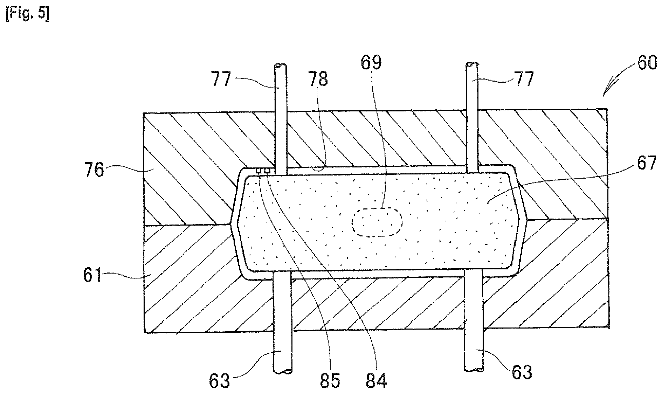

As shown in Fig. 5, the lower mold 61 is covered with an upper mold 76, and the rise of the sand core 67 can be suppressed by push pins 77, 77 which extend from the upper mold 76. The sand core 67 shown in Fig. 4 has a large planar area for playing a role of manufacturing the hollow swing arm front portion (symbol 32 in Fig. 3). In this embodiment, the movement of the sand core 67 in the horizontal direction is prevented by the front and rear core prints 68, 69, and the movement of the sand core 67 in the vertical direction is prevented by the support pins 63, 63 and the push pins 77, 77 shown in Fig. 5.

Although a cavity 78 is filled with molten metal in such a state, there is no possibility that the sand core 67 is displaced by molten metal.

Preferably, fastening-jig-use pins 84 and recessed-portion-use pins 85 are formed on the upper mold 76 in such a manner that these pins 84, 85 extend to a middle portion of the cavity 78.

When molten metal is solidified, the push pins 77, 77 are moved upwardly and the support pins 63, 63 are moved downwardly so as to remove these pins from a cast product. Further, the slide rods 62L, 62R shown in Fig. 4 are moved in the horizontal direction so as to remove the slide rods 62L, 62R from the cast product. The left and right slide molds 64L, 64R are moved along the partition walls 53L, 53R indicated by an imaginary line so as to remove the left and right slide molds 64L, 64R from the cast product. The cast product is removed from the lower mold 61 by removing the upper mold 76 shown in Fig. 5 from the lower mold 61.

The sand core 67 remains in the obtained cast product (hereinafter, referred to as a swing arm cast product).

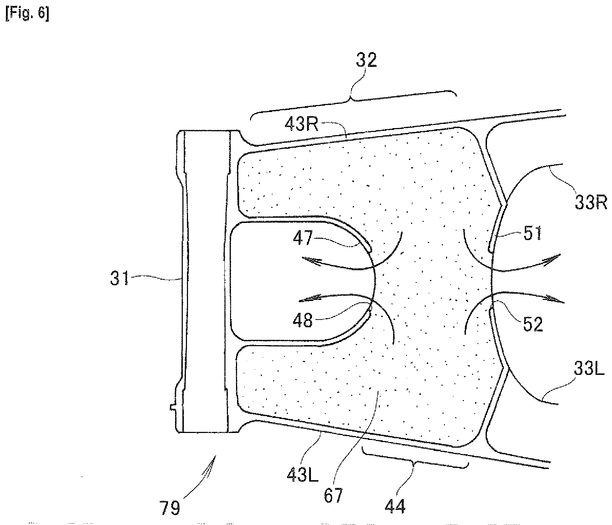

As shown in Fig. 6, the sand core 67 is scraped out from the sand removing holes 48, 52. Here, the front wall 47 faces a front space (the opening portion 55 in Fig. 3) defined between the pivot portion 31 and the left and right front arm portions 43L, 43R, and sand can be scraped out to the front space.

In the same manner, the rear wall 51 faces a rear space defined between the left and right rear arm portions 33L, 33R, and sand can be scraped out to the rear space. Accordingly, the sand core 67 can be easily scraped out.

As a result, the swing arm front portion 32 can be easily made hollow.

The sand removing holes 48, 52 are formed in the front wall 47 and the rear wall 51 of the cross portion 44 respectively. By forming the sand removing holes 48, 52 at such positions, these sand removing holes 48, 52 are barely visible from sides of the swing arm thus enhancing the design property.

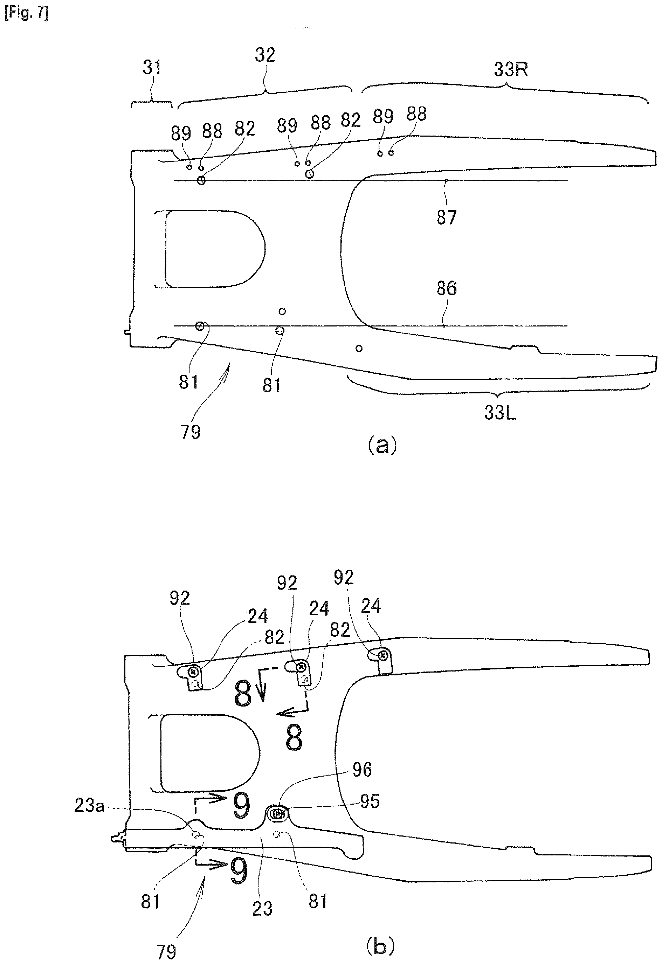

A manufactured swing arm cast product 79 is shown in Fig. 7(a). On an upper surface of the swing arm cast product 79, two through holes for casting 81 which are marks of the push pins (symbols 77, 77 in Fig. 5) remain on a left side, and two through holes for casting 82 remain on a right side.

The plurality of through holes for casting 81 are arranged along a line 86 which extends toward the rear side of the vehicle, and the plurality of through holes for casting 82 are arranged along a line 87 which extends toward the rear side of the vehicle.

In addition, fastening-portion mounting portions 88 formed by the fastening-jig-use pins (symbol 84 in Fig. 5) and projection housing recessed portions 89 formed by the recessed-portion-use pins 85 (symbol 85 in Fig. 5) are integrally formed on the periphery of the right through holes for casting 82 or the like.

As shown in Fig. 7(b), the left through holes for casting 81 are covered with a chain slider 23 in a post step. To be more specific, projections 23a extend toward a depth side of the drawing from a lower surface of the chain slider 23, and the projections 23a are fitted in the through holes for casting 81. Further, a fastening hole 95 is formed in the chain slider 23, and the fastening is performed by allowing a fastening jig 96 such as a screw or a bolt to pass through the fastening hole 95. The projections 23a play a role of positioning the chain slider 23 and a role of stopping the rotation of the chain slider 23 and hence, the chain slider 23 can be fixed by a small number of fastening jigs 96.

The chain slider 23 is a member for guiding rollers of the drive chain 22. Further, the right through holes for casting 82 are covered with hose guides 24 respectively in a post step.

Accordingly, it does not matter that the through holes for casting 81, 82 remain in the swing arm cast product 79.

The chain slider 23 and the hose guides 24 are some functional members which are always installed on the vehicle (motorcycle). As the functional members, various covers can be named and hence, the functional members are not limited to the chain slider 23 and the hose guides 24.

The through holes for casting 81, 82 are covered with the chain slider 23 and the hose guides 24 which constitute the functional members and hence, the through holes for casting 81, 82 are barely visually recognized from the outside thus enhancing the appearance.

In addition, the through holes for casting 81, 82 are covered with the functional members and hence, rain or the like barely enters the hollow portion. Further, the functional members are members which are always installed on the motorcycle and hence, the number of parts is not increased.

Further, the through holes for casting 81, 82 are covered with the functional members and hence, sounds resonating in the inside of the swing arm (the hollow portion of the swing arm front portion) barely leak thus substantially decreasing the resonance sounds.

The hose guides 24 and the chain slider 23 are arranged along the lines 86, 87 which extend toward the rear side of the vehicle. The appearance does not become unnatural even when the through holes for casting are covered with the hose guides 24 and the chain slider 23. The hose guides 24 and the chain slider 23 are members which are always installed on the motorcycle and hence, the number of parts is not increased.

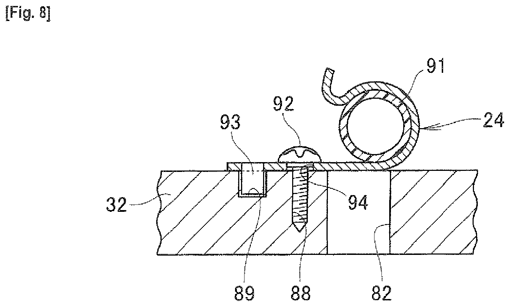

As shown in Fig. 8, the hose guide 24 is a clamper for holding a brake hose 91 and is fixed to the swing arm front portion 32 by threadedly engaging a rotary fastening jig 92 such as a screw, a small screw or a bolt into the fastening-portion mounting portion 88. Here, a projection 93 which is formed by bending the hose guide 24 is inserted into the projection housing recessed portion 89 before rotation.

By inserting the projection 93 into the projection housing recessed portion 89, the rotation of the hose guide 24 can be stopped. Accordingly, the hose guide 24 can be fixed by one rotary fastening jig 92. As compared with the case where the hose guide 24 is fixed by a plurality of rotary fastening jigs, the number of fastening jigs can be reduced. Further, it is sufficient to form only one through hole 94 which allows the rotary fastening jig 92 to pass therethrough in the hose guide 24 and hence, the hose guide 24 can be simplified and the weight of the hose guide 24 can be reduced.

Threads are preliminarily formed on the fastening-portion mounting portion 88 after casting. The projection housing recessed portion 89 is integrally formed by casting, and a lower hole of the fastening-portion mounting portion 88 is formed by casting and hence, an amount of machining which is applied to the product after casting can be decreased. However, there is no problem in forming the fastening-portion mounting portions 88 and the projection housing recessed portions 89 shown in Fig. 8 by machining after casting by omitting the fastening pins 84 and the recessed-portion-use pins 85 shown in Fig. 5.

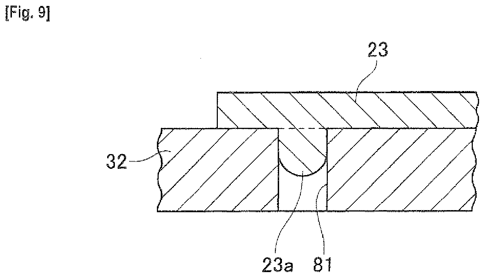

As shown in Fig. 9, the positioning projections 23a extend from the lower surface of the chain slider 23. By fitting the projections 23a in the through holes for casting 81, it is possible to perform positioning and stopping of the rotation of the chain slider 23.

Here, in the embodiment, although the rotation stopper member is mounted on the left rear arm portion and the chain receiving member is mounted on the right rear arm portion, when the chain is arranged on a right side of the vehicle-widthwise center, the rotation stopper member may be mounted on the right rear arm portion and the chain receiving member may be mounted on the left rear arm portion.

Further, the swing arm according to the present invention is applicable to a motorcycle, and is also applicable to a three-wheeled vehicle or a four-wheeled vehicle having the constitution where a swing arm extends from a vehicle body frame and a wheel is rotatably mounted on the swing arm.

The swing arm according to the present invention is preferably applicable to a motorcycle whose appearance and design are emphasized.

### [Description of Reference Numerals and Signs]

- 11:: vehicle body frame
- 12:: pivot shaft
- 13:: rear wheel
- 17:: caliper bracket
- 21:: sprocket (driven sprocket)
- 22:: chain (drive chain)
- 30:: swing arm
- 31:: pivot portion
- 32:: swing arm front portion
- 33L, 33R:: left/right rear arm portion
- 34:: rotation stopper member
- 35:: chain receiving member
- 37L, 37R:: outer wall portion
- 38L, 38R:: upper flange portion
- 39L, 39R:: lower flange portion
- 40:: vehicle-widthwise center
- 43L, 43R:: left/right front arm portion
- 44:: cross portion
- 47:: front wall of swing arm front portion
- 48, 52:: sand removing hole
- 51:: rear wall of swing arm front portion
- 53L, 53R:: partition wall
- 67:: sand core

## Claims

1. A swing arm (30) comprising: a pivot portion (31) which is able to be connected to a vehicle body frame (11) by a pivot shaft (12), a pair of left and right front arm portions (43L, 43R) which extends toward a rear side of a vehicle from the pivot portion (31), a cross portion (44) which connects rear portions of the pair of left and right front arm portions (43L, 43R), and left and right rear arm portions (33L, 33R) which extend toward the rear side of the vehicle from the cross portion (44) so as to sandwich a rear wheel (13) therebetween and support the rear wheel (13) in a rotatable manner, whereby a swing-arm front portion (32) which is constituted of the pair of left and right front arm portions (43L, 43R) and the cross portion (44) has a hollow structure, **characterized in that** the left and right rear arm portions (33L, 33R) are respectively constituted of an cuter wall portion (37L, 37R), an upper flange portion (38L, 38R) which extends toward the vehicle-widthwise center (40) from an upper end of the outer wall portion (37L, 37R), and a lower flange portion (39L, 39R) which extends toward the vehicle-widthwise center (40) from a lower end of the outer wall portion (37L, 37R), and the left and right rear arm portions (33L, 33R) have a U-shaped cross section which opens toward a vehicle-widthwise center (40) side, wherein the recess of the U-shaped cross section is open to the outside of the swing arm (30).

2. The swing arm according to claim 1, **characterized in that** the swing arm front portion (32) and the left and right rear arm portions (33L, 33R) are partitioned by partition walls (53L, 53R), and the partition walls (53L, 53R) are arranged in an inclined manner such that the partition walls (53L, 53R) are positioned more on a rear side of the vehicle as the partition walls extend toward the vehicle-widthwise center (40).

3. The swing arm according to claim 1 or claim 2, **characterized in that** outer surfaces of the pair of left and right front arm portions (43L, 43R) in the vehicle widthwise direction and outer surfaces of the left and right rear arm portions (33L, 33R) in the vehicle widthwise direction are formed of a continuous surface respectively, and
a rotation stopper member (34) which suppresses the rotation of a caliper bracket (17) is integrally formed on one of the left and right rear arm portions (33L, 33R) such that the rotation stopper member (34) extends toward the vehicle-widthwise center (40) from the outer wall portion (37L, 37R).

4. The swing arm according to any one of claims 1 to 3, **characterized in that** a chain receiving member (35) which receives a chain (22) coming off from a sprocket (21) is integrally formed on the other of the left and right rear arm portions (33L, 33R) such that the chain receiving member (35) extends toward the vehicle-widthwise center (40) from the upper flange portion (38L, 38R).

5. The swing arm according to any one of claims 1 to 4, **characterized in that** a sand removing hole (48, 52) for scraping out a sand core (67) after casting which is performed using the sand core (67) is formed in a front wall (47) and a rear wall (51) of the cross portion (44) respectively.

## Patentansprüche

1. Schwingarm (30), umfassend: einen Drehbereich (31), welcher dazu geeignet ist, mit einem Fahrzeugkörperrahmen (11) durch eine Drehwelle (12) verbunden zu sein, ein Paar von linken und rechten vorderen Armbereichen (43L, 43R), welche sich in Richtung einer Hinterseite eines Fahrzeugs von dem Drehbereich (31) erstrecken, einen Querbereich (44), welcher hintere Bereiche des Paars von linken und rechten vorderen Armbereichen (43L, 43R) verbindet, und linke und rechte hintere Armbereiche (33L, 33R), welche sich in Richtung der Hinterseite des Fahrzeugs von dem Querbereich (44) so erstrecken, dass ein Hinterrad (13) dazwischen eingeschoben ist und das Hinterrad (13) in einer drehbaren Art und Weise gestützt ist, wobei
ein vorderer Schwingarmbereich (32), welcher aus dem Paar von linken und rechten vorderen Armbereichen (43L, 43R) und dem Querbereich (44) gebildet ist, einen hohlen Aufbau aufweist, **dadurch gekennzeichnet, dass**
der linke und rechte hintere Armbereich (33L, 33R) jeweils aus einem äußeren Wandbereich (37L, 37R), einem oberen Flanschbereich (38L, 38R), welcher sich in Richtung der Fahrzeugbreitenmitte (40) von einem oberen Ende des äußeren Wandbereichs (37L, 37R) erstreckt, und einem unteren Flanschbereich (39L, 39R) gebildet ist, welcher sich in Richtung der Fahrzeugbreitenmitte (40) von einem unteren Ende des äußeren Wandbereichs (37L, 37R) erstreckt, und der linke und rechte hintere Armbereich (33L, 33R) einen u-förmigen Querschnitt aufweist, welcher sich in Richtung einer Seite der Fahrzeugbreitenmitte (40) öffnet, wobei die Vertiefung des u-förmigen Querschnitts zu der Außenseite des Schwingarms (30) offen ist.

2. Schwingarm nach Anspruch 1, **dadurch gekennzeichnet, dass** der vordere Schwingarmbereich (32) und der linke und rechte hintere Armbereich (33L, 33R) durch Trennwände (53L, 53R) unterteilt sind, und die Trennwände (53L, 53R) in einer geneigten Art und Weise derart angeordnet sind, dass die Trennwände (53L, 53R) weiter an einer Hinterseite des Fahrzeugs angeordnet sind, als sich die Trennwände in Richtung der Fahrzeugbreitenmitte (40) erstrecken.

3. Schwingarm nach Anspruch 1 oder Anspruch 2, **dadurch gekennzeichnet, dass** äußere Oberflächen des Paares von linken und rechten vorderen Armbereichen (43L, 43R) in der Fahrzeugbreitenrichtung und äußere Oberflächen der linken und rechten hinteren Armbereiche (33L, 33R) in der Fahrzeugbreitenrichtung jeweils aus kontinuierlichen Oberflächen gebildet sind, und
ein Drehstoppelement (34), welches die Drehung einer Bremszangenhalterung (17) unterdrückt, integral an einem der linken und rechten hinteren Armbereiche (33L, 33R) derart gebildet ist, dass sich das Drehstoppelement (34) in Richtung der Fahrzeugbreitenmitte (40) von dem äußeren Wandbereich (37L, 37R) erstreckt.

4. Schwingarm nach einem der Ansprüche 1 bis 3, **dadurch gekennzeichnet, dass** ein Kettenempfangselement (35), welches eine Kette (22) empfängt, die von einem Ritzel (21) kommt, integral an dem anderen der linken und rechten hinteren Armbereiche (33L, 33R) derart gebildet ist, dass sich das Kettenempfangselement (35) in Richtung der Fahrzeugbreitenmitte (40) von dem oberen Flanschbereich (38L, 38R) erstreckt.

5. Schwingarm nach einem der Ansprüche 1 bis 4, **dadurch gekennzeichnet, dass** ein Sandentfernungsloch (48, 52) zum Ausschaben eines Sandkerns (67) nach dem Gießen, welches unter Verwendung des Sandkerns (67) durchgeführt wird, in einer vorderen Wand (47) bzw. einer hinteren Wand (51) des Querbereichs (44) gebildet ist.

## Revendications

1. Bras oscillant (30) comprenant : une partie de pivotement (31) qui est apte à être reliée à un cadre de corps de véhicule (11) par un arbre de pivotement (12), une paire de parties de bras avant gauche et droit (43L, 43R) qui s'étend vers un côté arrière d'un véhicule depuis la partie de pivotement (31), une partie transversale (44) qui relie des parties arrière de la paire de parties de bras avant gauche et droit (43L, 43R), et des parties de bras arrière gauche et droit (33L, 33R) qui s'étendent vers le côté arrière du véhicule depuis la partie transversale (44) de sorte à prendre en sandwich une roue arrière (13) entre eux et supportent la roue arrière (13) de manière rotative, dans lequel
une partie avant de bras oscillant (32) qui est constituée de la paire de parties de bras avant gauche et droit (43L, 43R) et de la partie transversale (44) présente une structure creuse, **caractérisé en ce que**
les parties de bras arrière gauche et droit (33L, 33R) sont constituées respectivement d'une partie de paroi extérieure (37L, 37R), d'une partie de bride supérieure (38L, 38R) qui s'étend vers le centre de la largeur du véhicule (40) depuis une extrémité supérieure de la partie de paroi extérieure (37L, 37R), et d'une partie de bride inférieure (39L, 39R) qui s'étend vers le centre de la largeur du véhicule (40) depuis une extrémité inférieure de la partie de paroi extérieure (37L, 37R) et les parties de bras arrière gauche et droit (33L, 33R) présentent une section transversale en U qui s'ouvre vers un côté de centre de la largeur du véhicule (40), dans lequel l'évidement de la section transversale en U est ouvert vers le côté extérieur du bras oscillant (30).

2. Bras oscillant selon la revendication 1, **caractérisé en ce que** la partie avant de bras oscillant (32) et les parties de bras arrière gauche et droit (33L, 33R) sont divisées par des parois de séparation (53L, 53R) et les parois de séparation (53L, 53R) sont agencées de manière inclinée de sorte que les parois de séparation (53L, 53R) soient positionnées plus sur un côté arrière du véhicule lorsque les parois de séparation s'étendent vers le centre de la largeur du véhicule (40).

3. Bras oscillant selon la revendication 1 ou 2, **caractérisé en ce que** des surfaces extérieures de la paire de parties de bras avant gauche et droit (43L, 43R) dans la direction de largeur du véhicule et des surfaces extérieures des parties de bras arrière gauche et droit (33L, 33R) dans la direction de la largeur du véhicule sont formées d'une surface continue respectivement et
un élément d'arrêt de rotation (34) qui supprime la rotation d'un support d'étrier (17) est intégralement formé sur une des parties de bras arrière gauche et droit (33L, 33R) de sorte que l'élément d'arrêt de rotation (34) s'étende vers le centre de la largeur du véhicule (40) depuis la partie de paroi extérieure (37L, 37R).

4. Bras oscillant selon l'une quelconque des revendications 1 à 3, **caractérisé en ce qu'**un élément de réception de chaîne (35) qui reçoit une chaîne (22) sortant d'un pignon (21) est intégralement formé sur l'autre des parties de bras arrière gauche et droit (33L, 33R) de sorte que l'élément de réception de chaîne (35) s'étende vers le centre de la largeur du véhicule (40) depuis la partie de bride supérieure (38L, 38R).

5. Bras oscillant selon l'une quelconque des revendications 1 à 4, **caractérisé en ce qu'**un trou de retrait de sable (48, 52) destiné à racler un coeur de sable (67) après le moulage qui est réalisé en utilisant le coeur de sable (67), est formé respectivement dans une paroi avant (47) et une paroi arrière (51) de la partie transversale (44).
